# EUROPÄISCHE PATENTSCHRIFT

(11) **EP 2 385 087 B1**
(45) Veröffentlichungstag und Bekanntmachung des Hinweises auf die Patenterteilung: **24.07.2019**
(21) Anmeldenummer: 11002336.3
(22) Anmeldetag: 21.03.2011
(51) Int. Cl.: C09J 7/20, A47K 3/00

(54) **Dicht- und Montageband**
Sealing and mounting tape
Bande d'étanchéité et de montage

(30) Priorität: 14.04.2010 DE 202010005018 U
(43) Veröffentlichungstag der Anmeldung: 09.11.2011
(73) Patentinhaber: SANIPAT GmbH, 6045 Meggen (CH)
(72) Erfinder: Gassmann, Urs, 6343 Rotkreuz (CH)
(74) Vertreter: Reb, Carina

(56) Entgegenhaltungen:
- DE-A1-102007 043 593

## Beschreibung

Die vorliegende Erfindung betrifft ein Dicht- und Montageband, wie es im Sanitärbereich beim Setzen von Bade-, Duschwannen, Waschbecken oder ähnlichen Einbaugegenständen Verwendung findet.

Solche Dicht- und Montagebänder weisen üblicherweise eine Klebefläche auf einer Vorderseite auf, die bündig mit dem Rand des Einbaugegenstandes - beispielsweise an einer senkrechten Ausprägung des Wannenrandes, auch Wannenauf- oder - abbordung genannt - angebracht werden. Diese Klebefläche auf der Vorderseite ist nur in einem unteren Bereich des Dicht- und Montagebandes angeordnet, sodass nach dem Anbringen des Dicht- und Montagebandes an dem Rand des Einbaugegenstandes ein oberer Bereich des Dicht- und Montagebandes den Rand des Einbaugegenstandes überragt. Die Rückseite dieses oberen Bereiches des Dicht- und Montagebandes weist ebenfalls eine Klebefläche auf, die an einer Anschlusswand oder an einem Anschlussboden angeklebt wird und anschliessend üblicherweise überlappend befliest wird.

Somit besteht grundsätzlich bei jedem Dicht- und Montageband für die beschriebenen Zwecke eine erste Klebe- bzw. Dichtfläche zum Einbaugegenstand und eine zweite Klebe- bzw. Dichtfläche zu der Anschlusswand oder dem Anschlussboden. Diese beiden Klebe- bzw. Dichtflächen sind üblicherweise ein- oder mehrstückig durch das Material einer Trägerfolie bzw. eines Trägerstreifens miteinander verbunden.

In der täglichen Anwendung hat sich gezeigt, dass es von Vorteil ist, wenn die Trägerfolie des Dicht- und Montagebandes zwar biegsam, aber relativ widerstandsfähig ist. Insbesondere die zweite Klebe- bzw. Dichtfläche zu der Anschlusswand oder dem Anschlussboden hingegen ist wünschenswerterweise möglichst geschmeidig, um selbst auf nicht ganz glatten oder gar porösen Fliesuntergründen eine zuverlässige Dichtigkeit zu gewährleisten. Dieser Widerspruch stellt einen Nachteil bei der Herstellung herkömmlicher Dicht- und Montagebänder dar.

Ein weiterer Nachteil ergibt sich bei der Montage eines Einbaugegenstandes hinein in eine Ecke, die beispielsweise aus zwei zueinander annähernd senkrecht stehenden Anschlusswänden gebildet ist. Solche Ecken sind besonders anfällig gegen Feuchtigkeitseinbruch und Schimmelbildung. Wenn das Material des Dicht- und Montagebandes bzw. die Trägerfolie so weich und geschmeidig ist, dass es gut in die Ecke eingeklebt werden kann, dann bietet es die erwünschte Robust- und Dichtheit nicht mehr, auch im Hinblick auf minimale Bewegungen nicht, die zwischen dem Einbaugegenstand und der Anschlusswand bestehen, man denke diesbezüglich beispielsweise an die unterschiedlichen Temperaturausdehnungskoeffizienten von z.B. Stahlbadewannen und Mauerwerk oder Beton oder Setzungen des Einbaugegenstandes oder Bodensetzungen.

Die Verwendung genügend robuster Materialien als Material für das Dicht- und Montageband bzw. für die Trägerfolie ist wiederum nachteilig für die Montage des Einbaugegenstandes in eine Ecke. Um die Fliesen mehr oder minder auf Stoss setzen zu können, zugunsten eines anschliessenden Verfugens mittels einer ansprechenden, nicht allzu breiten Silikonfuge, ist der Fliesenleger versucht, das Material des Dicht- und Montagebandes oder die Trägerfolie einzuschneiden. Somit ist ausgerechnet in den feuchtigkeitsanfälligen Ecken die Dichtigkeit gefährdet, was wiederum einen Nachteil bei herkömmlichen Dicht- und Montagebändern darstellt.

Die Aufgabe der vorliegenden Erfindung ist, ein Dicht- und Montageband zu stellen, das die oben beschriebenen Nachteile weitestgehend vermeidet und auch sonst die Dichtigkeit zwischen Einbaugegenstand und Anschlusswand oder Anschlussboden

Die Offenlegungsschrift DE 10 2007 043 593 A1 offenbart ein Dichtelement zur Ausbildung eines Wandanschlusses bei Sanitärartikeln, wobei ein Grundkörper des Dichtelementes einen ersten, sanitärartikelseitigen Klebebereich und einen zweiten, wandseitigen Klebebereich aufweist. Der Grundkörper kann aus Metall, CFK oder einem Verbundwerkstoff sein und formt zur Erreichung ausreichender Flexibilität der Überbrückung des Spaltes zwischen der Anschlusswand und dem Sanitärartikel einen mittigen, elastisch nachgiebigen Bereich aus, in Form eines Wellenprofils. Diesen elastisch nachgiebigen Bereich herzustellen, ist jedoch insbesondere bei steifem oder dickerem Grundkörper-Material nur schwer oder aufwändig realisierbar und teuer.

Die Aufgabe der vorliegenden Erfindung ist, ein Dicht- und Montageband zu stellen, das die oben beschriebenen Nachteile weitestgehend vermeidet, die Beweglichkeit der Spaltenüberbrückung und auch sonst die Dichtigkeit zwischen Einbaugegenstand und Anschlusswand verbessert, sowie die Praktikabilität bei der Montage erhöht. verbessert, sowie die Praktikabilität bei der Montage erhöht.

Die Lösung der Aufgabe besteht zunächst in der Integration eines zusätzlichen Dichtstreifens in den oberen Bereich einer herkömmlichen Mindestanordnung bestehend aus einer Trägerfolie mit einer vorder- und einer rückseitigen Klebefläche. Dieser zusätzliche Dichtstreifen verlängert den oberen Bereich der Trägerfolie und besteht vorzugsweise aus einem anderen Material als die Trägerfolie selbst. Gemäss einer ersten Basisvariante eines erfindungsgemässen Dicht- und Montagebandes ist hierfür an der Rückseite des oberen Bereiches der Trägerfolie vorzugsweise keine Klebefläche mehr vorgesehen, - an der Vorderseite dieses oberen Bereiches auch nicht - und der zusätzliche Dichtstreifen überlappt den oberen Bereich der Trägerfolie. Überlappen bedeutet, dass im montierten Zustand des Dicht- und Montagebandes mindestens ein Teil des oberen Bereiches der Trägerfolie zwischen dem zusätzlichen Dichtstreifen - im Folgenden Verlängerungs-Dichtstreifen genannt - und der Anschlusswand oder dem Anschlussboden eingeschlossen ist.

Die Rückseite des unteren Bereiches der Trägerfolie ist im Sinne einer Schallsperre vorzugsweise mit einem Schaumstoff oder einem relativ dicken Klebebett ausgekleidet, der eine Schalltransmission zwischen dem Einbaugegenstand und der Anschlusswand gut unterbindet und der mit der Anschlusswand nicht verklebt wird.

Der Verlängerungs-Dichtstreifen ist vorzugsweise aus einem relativ weichen und geschmeidigen Material gefertigt, jedenfalls weicher und biegsamer als das Material der Trägerfolie, beispielsweise aus einem Vlies, auf das sich auch der Fliesenkleber gut auftragen lässt.

Dadurch, dass der Verlängerungs-Dichtstreifen weicher und biegsamer als das Material der Trägerfolie ist, kann bei einer Eckmontage ohne Weiteres die Klebeverbindung zwischen dem oberen Bereich der Trägerfolie und dem Verlängerungs-Dichtstreifen kurzzeitig gelöst werden, das Material der Trägerfolie ein Stück weit eingeschnitten werden, die Schnittenden in die Ecke eingeklebt werden und anschliessend mit dem überlappenden Verlängerungs-Dichtstreifen wieder überklebt werden.

Gemäss einer alternativen Ausgestaltungsvariante eines erfindungsgemässen Dicht- und Montagebandes ist der Verlängerungs-Dichtstreifen nicht den oberen Bereich der Trägerfolie überlappend an ihrer Vorderseite angeordnet, sondern diesen Bereich unterlappend. Unterlappen bedeutet, dass im montierten Zustand des Dicht- und Montagebandes der Verlängerungs-Dichtstreifen zwischen dem oberen Bereich der Trägerfolie und der Anschlusswand eingeschlossen ist. Hierfür kann an der Rückseite des oberen Bereiches der Trägerfolie eine Klebefläche vorgesehen sein, aber auch je eine Klebefläche an Vorder- und Rückseite des Verlängerungs-Dichtstreifens und keine Klebefläche an der Rückseite des oberen Bereiches der Trägerfolie.

Die Klebefläche an der Rückseite des Verlängerungs-Dichtstreifens - sei es in der überlappenden oder in der unterlappenden Anordnung - kann wahlweise ganzflächig oder aber auch nur partiell ausgestaltet sein.

Bei einer weiteren, optionalen Ausgestaltungsvariante eines erfindungsgemässen Dicht- und Montagebandes ist der obere Bereich der Trägerfolie und der Verlängerungs-Dichtstreifen einstückig ausgeformt, beispielsweise indem das Material des oberen Bereiches der Trägerfolie und das hiervon unterschiedliche Material des Verlängerungs-Dichtstreifens miteinander verschweisst sind.

Eine weitere Ausgestaltungsvariante eines erfindungsgemässen Dicht- und Montagebandes sieht einen weiteren, dichtenden Klebestreifen an der Vorderseite der Trägerfolie als sogenannten Kapillarschutz für den Abschlussbereich der anschliessend aufgebrachten Befliesung vor. Dieser Kapillarschutz-Klebestreifen kann auf eine hierfür vorgesehene Klebefläche an der Trägerfolie aufgeklebt sein, oder mittels einer eigenen, rückseitigen Klebefläche unmittelbar auf dem Material der Trägerfolie angeklebt sein. Die Vorderseite des Kapillarschutz-Klebestreifens ist als Klebefläche ausgestaltet und vorzugsweise mit einer Schutzfolie abgedeckt, die erst nach dem Auftragen des Fliesenklebers und vor dem Setzen der Fliesen abgezogen wird. Das Material, aus dem der Kapillarschutz-Klebestreifen gefertigt ist, kann elastisch sein, ist jedoch vorzugsweise plastisch deformierbar, sodass es keine Rückstellkraft auf die darauf aufgebrachten Fliesen ausübt.

Sämtliche beschriebenen Klebeflächen eines erfindungsgemässen Dicht- und Montagebandes können mit einer Schutzfolie oder einem Papierstreifen abgedeckt sein, die oder der erst abgezogen wird, wenn der entsprechende Montage-Verfahrensschritt es vorsieht bzw. bevor die jeweilige Klebefläche mit dem endgültigen Material in Berührung kommen soll.

Statt dem in Absatz [0015] beschriebenen, klebenden Kapillarschutz kann alternativ auch ein Unterfütterungs-Streifen an der Trägerfolie eines erfindungsgemässen Dicht- und Montagebandes angeordnet sein. Dieser Unterfütterungs-Streifen besteht vorzugsweise aus einem weichen, aber wasserundurchlässigen Schaumstoff und weist an seiner Vorderseite vorzugsweise keine Klebefläche auf.

Des Weiteren ist es möglich, sowohl einen klebenden Kapillarschutz-Klebestreifen, als auch einen parallel angeordneten Unterfütterungs-Streifen an der Trägerfolie eines erfindungsgemässen Dicht- und Montagebandes vorzusehen.

Die beschriebenen Klebeflächen bestehen vorzugsweise aus einem elastischen Klebestoff oder aus einem elastischen Material mit elastischen Klebeflächen. Auf diese Weise ist eine gute Dichtigkeit der Klebeverbindung gewährleistet, selbst wenn die verklebten Gegenstände sich im Verhältnis zueinander bewegen.

Gemäss einer weiteren Ausgestaltungsvariante ist der Verlängerungs-Dichtstreifen vorzugsweise aus einem Vlies gefertigt, das plastisch dehnbar ist. Auf diese Weise können mittels einer Handrolle allfällige Spannungen in dem Verlängerungs-Dichtstreifen zugunsten einer verbesserten Dichtigkeit der Klebeverbindung beseitigt werden. Bei einer Eckmontage des Einbaugegenstandes kann unter Umständen die erwünschte Widerstandsfähigkeit der Trägerfolie einem Ankleben der Letzteren bis tief in die Eckkante hinein im Wege stehen. Der Monteur kann die Klebeverbindung zwischen Trägerfolie und Verlängerungs-Dichtstreifen lösen, die Trägerfolie ein Stück weit einschneiden, die Schnittenden der Trägerfolie an die jeweilige Anschlusswand anpressen und anschliessend den quasi zu kurzen Verlängerungs-Dichtstreifen mit einem stumpf kantigen Gegenstand komplett in die Ecke dehnen und dicht ankleben.

Eine weitere Ausgestaltungsvariante eines erfindungsgemässen Dicht- und Montagebandes sieht eine weitere Fläche bzw. Trägerfläche vor, die im montierten Zustand waagerecht auf der waagerechten Oberseite der Auf- oder Abbordung des Einbaugegenstandes zu liegen kommt. Diese waagerechte Trägerfläche kann aus einer biegsamen Folie bestehen, die an die Trägerfolie mittels eines Auf- oder Abbuges angeklebt ist. Auch eine Befestigung der waagerechten Trägerfläche mittels einer dämmenden oder nicht dämmenden Zwischenfolie - vollflächig oder nur partiell verklebt - kommt in Betracht. Die Trägerfolie selbst kann jedoch auch von vornherein als ein einstückiges T-Profil gefertigt sein.

Die waagerechte Trägerfläche muss nicht zwingend an der Trägerfolie befestigt sein, sondern kann alternativ, beispielsweise ebenfalls mit einem angeklebten Auf- oder Abbug - auch an dem Verlängerungs-Dichtstreifen angeordnet sein, der in diesem Fall den gesamten oberen Bereich der Trägerfolie an seiner Vorderseite überlappen muss.

Die waagerechte Trägerfläche trägt mittels einer Klebefläche vorzugsweise einen Schaumstoff-Streifen aus einem Schaumstoff, der vorzugsweise wasserundurchlässig ist und ca. zwischen 0.01 mm und 20 mm dick ist, vorzugsweise ca. 5 mm. Dieser Schaumstoff-Streifen weist vorzugsweise mindestens eine Längsperforation auf, an der er, entsprechend der Stärke der Fliesen, abgerissen werden kann. Der so zwischen den Fliesen und der waagerechten Oberfläche der Wannenauf- oder -abbordung verbliebene Abriss des Schaumstoff-Streifens verbessert die Dichtigkeit des gesamten Dicht- und Montagebandes nochmal, erleichtert das Fliesenlegen und hilft, eine massgerechte Fugenausbildung zu erreichen, bzw. eine Drei-Punkt-Haftung der Silikonfuge zu vermeiden.

Der Schaumstoff-Streifen ist vorzugsweise von den üblicherweise im Sanitärbereich verwendeten Farben farblich abgesetzt, beispielsweise in einem kräftigen Blau. Das eventuelle Durchscheinen dieser Farbe gibt Rückschlüsse auf ungenügende Silikonfugen.

Die vorliegende Anmeldung offenbart ein Verfahren mit einem Dicht- und Montageband, bei dem folgende Verfahrensschritte ausgeführt werden:
a) Ankleben einer Trägerfolie an einer annähernd senkrechten Fläche eines Einbaugegenstandes mittels einer Klebefläche;
b) Ankleben eines Verlängerungs-Dichtstreifens an einem oberen Bereich der Trägerfolie mittels einer Klebefläche;
c) Ankleben des Verlängerungs-Dichtstreifens an einer Anschlusswand mittels einer Klebefläche;
d) Ausrichten und Ankleben einer annähernd waagerechten Trägerfläche an einer annähernd waagerechten Fläche des Einbaugegenstandes mittels einer Klebefläche;
e) Verlegen von Fliesen;
f) Abreissen eines Schaumstoff-Streifens entlang einer Längsperforation.

Des Weiteren offenbart die vorliegende Anmeldung ein zweites Verfahren für die Applikation eines erfindungsgemässen Dicht- und Montagebandes in eine Ecke, wobei zwischen den Verfahrensschritten a) und b) des ersten Verfahrens folgende Verfahrensschritte eingefügt sind:
aa) partielles Lösen der Klebeverbindung zwischen dem Verlängerungs-Dichtstreifen und der Trägerfolie;
bb) partielles Einschneiden der Trägerfolie und Anpressen der Schnittenden in die Ecke;
cc) Dehnen und Ankleben des Verlängerungs-Dichtstreifens in der Ecke.

Ein erfindungsgemässes Dicht- und Montageband bringt folgende Vorteile:
- Die Dichtigkeit des Dicht- und Montagebandes ist verbessert und hält länger.
- Das Material der Trägerfolie kann widerstandsfähig gewählt sein.
- Die Schallübertragung zwischen Einbaugegenstand und Anschlusswand oder Anschlussboden ist unterbunden.
- Die mittels eines erfindungsgemässen Dicht- und Montagebandes erzielte Verbindung zwischen einem Einbaugegenstand und der Anschlusswand oder dem Anschlussboden ist elastisch und macht Bewegungen mit.
- Die Verarbeitungsschritte sind optimiert.
- Die Eckmontage ist deutlich verbessert und liefert ein dichtes Ergebnis.
- Die Schlussfugen aus Silikon sind ansprechend schmal und materialsparend und es wird eine ungünstige Drei-Punkt-Haftung vermieden.

Die beschriebenen unterschiedlichen Ausgestaltungsvarianten eines erfindungsgemässen Dicht- und Montagebandes sind miteinander kombinierbar. So kann beispielsweise - je nach eventuellen baulichen Voraussetzungen - eine bzw. jede der beschriebenen Basisvarianten eines erfindungsgemässen Dicht- und Montagebandes die beschriebene Schallsperre, den beschriebenen Kapillarschutz, den beschriebenen Unterfütterungs-Streifen oder die waagerechte Klebefläche, mit oder ohne längsperforiertem Schaumstoff-Streifen jeweils einzeln, beliebig kombiniert oder alles zusammen aufweisen.

Weitere oder vorteilhafte Ausgestaltungen eines erfindungsgemässen Dicht- und Montagebandes bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht massstabsgetreu, auch in der Relation der einzelnen Bestandteile zueinander nicht. Gleiche Bezugszeichen bedeuten gleiche Bauteile, Bezugszeichen mit unterschiedlichen Indices geben funktionsgleiche oder ähnliche Bauteile an.

Es zeigen dabei
Fig. 1 eine erste Ausgestaltungsvariante eines erfindungsgemässen Dicht- und Montagebandes im montierten Zustand;
Fig. 2 eine zweite Ausgestaltungsvariante eines erfindungsgemässen Dicht- und Montagebandes im montierten Zustand und
Fig. 3 eine dritte Ausgestaltungsvariante eines erfindungsgemässen Dicht- und Montagebandes, ebenfalls im montierten Zustand.

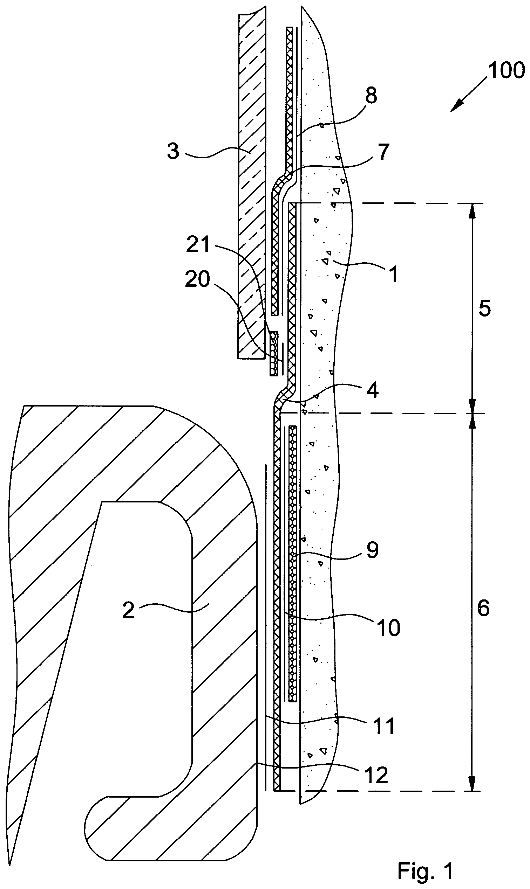

In der Fig. 1 ist eine erste Ausgestaltungsvariante eines erfindungsgemässen Dicht- und Montagebandes 100 schematisch und geschnitten im montierten Zustand zwischen einer Anschlusswand 1, einer beispielhaften Wannenabbordung 2 und einer Wandfliese 3 dargestellt. Der Fliesenkleber, mit dem die Wandfliese angeklebt ist, oder allfällige Dichtschlämmen sind der besseren Verständlichkeit halber weggelassen. Ebenfalls der besseren Verständlichkeit halber sind alle Klebeflächen symbolisch lediglich mittels einer Linie dargestellt, die leicht beabstandet von den sie im montierten Zustand eigentlich bündig verbindenden Materialien eingezeichnet ist.

Das Dicht- und Montageband 100 umfasst eine Trägerfolie 4, die sich in einen oberen Bereich 5 und einen unteren Bereich 6 unterteilt. Der obere Bereich 5 der Trägerfolie 4 wird von einem Verlängerungs-Dichtstreifen 7 überlappt, der aus einem weicheren und geschmeidigeren Material als die Trägerfolie 4 besteht und an seiner gesamten Rückseite mit einer Klebefläche 8 ausgestattet ist.

Der untere Bereich 6 der Trägerfolie 4 ist zu der Anschlusswand 1 mittels einer Schallsperre 9 schallentkoppelt, die mit einer Klebefläche 10 an der Rückseite des unteren Bereiches 6 der Trägerfolie 4 befestigt ist. An der Vorderseite des unteren Bereiches 6 der Trägerfolie 4 befindet sich eine Klebefläche 11, mittels derer die Trägerfolie 4 an einer annähernd senkrechten Fläche 12 der Wannenabbordung 2 angeklebt ist.

Optional ist an der Vorderseite des oberen Bereiches 5, unterhalb des Verlängerungs-Dichtstreifens 7, ein Unterfütterungs-Streifen 21 mit einer Klebefläche 20 an der Trägerfolie 4 angeklebt.

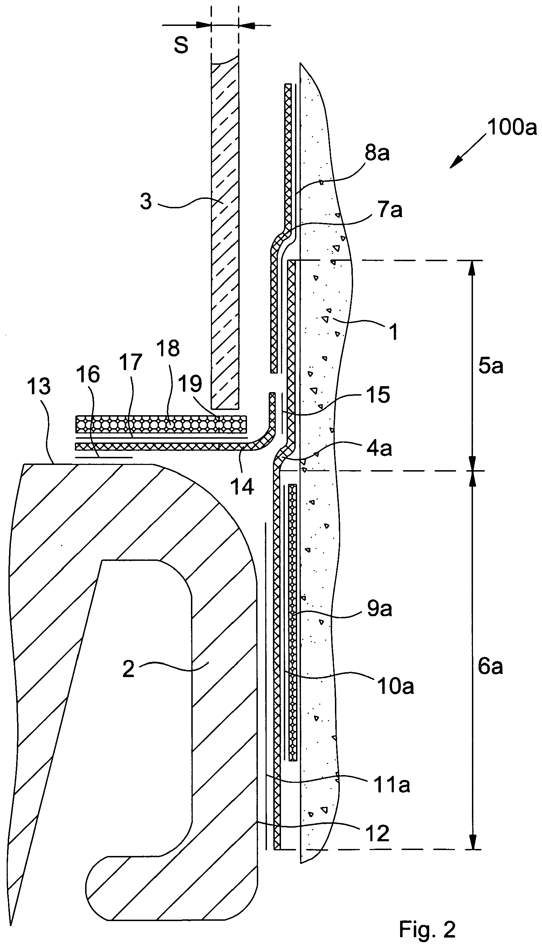

Die Fig. 2 zeigt eine schematische Schnittdarstellung einer zweiten Ausgestaltungsvariante eines erfindungsgemässen Dicht- und Montagebandes 100a im montierten Zustand, ebenfalls zwischen der Anschlusswand 1, der beispielhaften Wannenabbordung 2 und der Wandfliese 3 aus der Fig. 1.

Das dargestellte Dicht- und Montageband 100a umfasst ausser des in der Fig. 1 gezeigten Unterfütterungs-Streifens 21 grundsätzlich dieselbe Anordnung einer Trägerfolie 4a mit einem oberen Bereich 5a, einem unteren Bereich 6a, einem überlappenden Verlängerungs-Dichtstreifen 7a mit einer Klebefläche 8a, einer Schallsperre 9a mit einer Klebefläche 10a sowie einer Klebefläche 11a zu der annähernd senkrechten Fläche der Wannenabbordung 2.

Darüber hinaus jedoch umfasst das Dicht- und Montageband 100a des Weiteren eine waagerechte Trägerfläche 14, die als biegsame Folie mit einem Aufbug ausgestaltet ist und mit einer Klebefläche 15 an einem ungefähr mittigen Bereich der Trägerfolie 4a befestigt ist. Mittels einer Klebefläche 16 an der Unterseite ist die waagerechte Trägerfläche 14 an einer annähernd waagerechten Fläche 13 der Wannenabbordung 2 angeklebt. Eine weitere Klebefläche 17 an der Oberseite der waagerechten Trägerfläche 14 trägt einen Schaumstoff-Streifen 18 mit einer Längsperforation 19, die entsprechend einer Stärke S der Wandfliese 3 angeordnet ist. Die Längsperforation 19 ist auch in der Klebefläche 17 und der waagerechten Trägerfläche 14 vorgesehen.

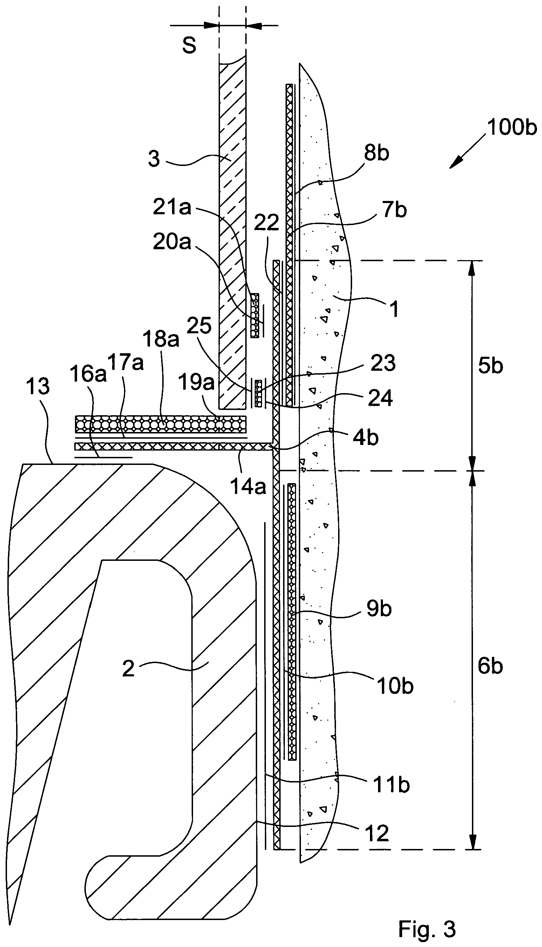

Die Fig. 3 zeigt, ebenfalls in einer schematischen Schnittdarstellung, eine dritte Ausgestaltungsvariante eines erfindungsgemässen Dicht- und Montagebandes 100b, das sich im Unterschied zu dem Dicht- und Montageband 100a aus der Fig. 2 zunächst dadurch auszeichnet, dass eine Trägerfolie 4b als einstückiges T-Profil mit einer integrierten waagerechten Trägerfläche 14a ausgebildet ist. Des Weiteren ist ein oberer Bereich 5b der Trägerfolie 4b von einem Verlängerungs-Dichtstreifen 7b unterlappt, indem eine Klebefläche 22 an der Rückseite des oberen Bereiches 5b der Trägerfolie 4b angeordnet ist. Der Verlängerungs-Dichtstreifen 7b ist mit einer Klebefläche 8b an der Anschlusswand 1 angeklebt.

An der Vorderseite des oberen Bereiches 5b der Trägerfolie 4b oder bessergesagt des Trägerprofils 4b ist ein Unterfütterungs-Streifen 21a mittels einer Klebefläche 20a befestigt. Parallel hierzu ist ein Kapillarschutz-Klebestreifen 23 mit einer Klebefläche 24 an dem oberen Bereich 5b des Trägerprofils 4b angeordnet. Die Vorderseite des Kapillarschutz-Klebestreifens 23 weist eine Klebefläche 25 auf, an der die Wandfliese 3 angeklebt ist.

Die waagerechte Trägerfläche 14a trägt mit einer Klebefläche 17a einen Schaumstoff-Streifen 18a, der eine Längsperforation 19a entsprechend der Stärke S der Wandfliese 3 aufweist. An der Unterseite der waagerechten Trägerfläche 14a ist eine Klebefläche 16a zu der annähernd waagerechten Fläche 13 der Wannenabbordung 2 angeordnet.

Ein unterer Bereich 6b des Trägerprofils 4b weist an seiner Rückseite eine Schallsperre 9b auf, die mit einer Klebefläche 10b befestigt ist und an der Vorderseite eine Klebefläche 11b, mittels derer das Trägerprofil 4b an der annähernd senkrechten Fläche 12 der Wannenabbordung 2 gehalten ist.

### Bezugszeichenliste

- 1 -: Anschlusswand
- 2 -: Wannenabbordung, Einbaugegenstand
- 3 -: Wandfliese
- 4, 4a, 4b -: Trägerfolie, Trägerstreifen, Trägerprofil
- 5, 5a, 5b -: oberer Bereich von 4
- 6, 6a, 6b -: unterer Bereich von 4
- 7, 7a, 7b -: Verlängerungs-Dichtstreifen
- 8, 8a, 8b -: Klebefläche von 7 zu 1
- 9, 9a, 9b -: Schallsperre
- 10, 10a, 10b -: Klebefläche von 6 zu 9
- 11, 11a, 11b -: Klebefläche von 6 zu 2
- 12 -: annähernd senkrechte Fläche von 2
- 13 -: annähernd waagerechte Fläche von 2
- 14, 14a -: annähernd waagerechte Trägerfläche
- 15 -: Klebefläche von 14 zu 4a
- 16, 16a -: Klebefläche von 14 zu 2
- 17, 17a -: Klebefläche von 14 zu 18
- 18, 18a -: Schaumstoff-Streifen
- 19, 19a -: Längsperforation
- 20, 20a -: Klebefläche von 14 zu 21
- 21, 21a -: Unterfütterungs-Streifen
- 22 -: Klebefläche von 4b zu 7b
- 23 -: Kapillarschutz-Klebestreifen
- 24 -: Klebefläche von 23 zu 4b
- 25 -: Klebefläche von 23 zu 3

- 100, 100a, 100b - Dicht-: und Montageband

- S -: Stärke von 3

## Patentansprüche

1. Dicht- und Montageband (100, 100a, 100b) zum Setzen eines Einbaugegenstandes (2) an mindestens eine Anschlusswand (1) oder mindestens einen Anschlussboden, wobei das Dicht- und Montageband (100, 100a, 100b) eine Trägerfolie (4, 4a, 4b) mit einem unteren Bereich (6, 6a, 6b) und einer daran angeordneten ersten, einbaugegenstandsseitigen Klebefläche (11, 11a, 11b) für eine annähernd senkrechte Fläche (12) des Einbaugegenstandes (2) und mit einem oberen Bereich (5, 5a, 5b), sowie eine zweite, anschlusswandseitige Klebefläche (8, 8a, 8b) für die mindestens eine Anschlusswand (1) oder den mindestens einen Anschlussboden umfasst, **dadurch gekennzeichnet, dass** die zweite, anschlusswandseitige Klebefläche (8, 8a, 8b) an einem Verlängerungs-Dichtstreifen (7, 7a, 7b) angeordnet ist und der Verlängerungs-Dichtstreifen (7, 7a, 7b) an dem oberen Bereich (5, 5a, 5b) der Trägerfolie (4, 4a, 4b) über- oder unterlappend angeklebt ist oder mit ihm verschweißt ist.

2. Dicht- und Montageband (100, 100a, 100b) nach Anspruch 1, **dadurch gekennzeichnet, dass** der Verlängerungs-Dichtstreifen (7, 7a, 7b) aus einem weicheren, biegsameren Material als das Material des oberen Bereiches (5, 5a, 5b) der Trägerfolie (4, 4a, 4b) besteht.

3. Dicht- und Montageband (100, 100a) nach Anspruch 1 oder 2, **dadurch gekennzeichnet, dass** der Verlängerungs-Dichtstreifen (7, 7a) den oberen Bereich (5, 5a) der Trägerfolie (4, 4a) überlappt, sodass im montierten Zustand des Dicht- und Montagebandes (100, 100a) der obere Bereich (5, 5a) der Trägerfolie (4, 4a) teilweise zwischen dem Verlängerungs-Dichtstreifen (7, 7a) und der Anschlusswand (1) oder dem Anschlussboden eingeschlossen ist.

4. Dicht- und Montageband (100b) nach Anspruch 1 oder 2, **dadurch gekennzeichnet, dass** der Verlängerungs-Dichtstreifen (7b) den oberen Bereich (5b) der Trägerfolie (4b) unterlappt, sodass im montierten Zustand des Dicht- und Montagebandes (100b) der Verlängerungs-Dichtstreifen (7b) teilweise zwischen dem oberen Bereich (5b) der Trägerfolie (4b) und der Anschlusswand (1) oder dem Anschlussboden eingeschlossen ist.

5. Dicht- und Montageband (100, 100a, 100b) nach einem der vorhergehenden Ansprüche, **dadurch gekennzeichnet, dass** an dem unteren Bereich (6, 6a, 6b) der Trägerfolie (4, 4a, 4b) mittels einer Klebefläche (10, 10a, 10b) eine Schallsperre (9, 9a, 9b) angeordnet ist.

6. Dicht- und Montageband (100b) nach einem der vorhergehenden Ansprüche, **dadurch gekennzeichnet, dass** an dem oberen Bereich (5b) der Trägerfolie (4b) mittels einer Klebefläche (24) ein Kapillarschutz-Klebestreifen (23) angeordnet ist.

7. Dicht- und Montageband (100, 100b) nach einem der vorhergehenden Ansprüche, **dadurch gekennzeichnet, dass** an dem oberen Bereich (5, 5b) der Trägerfolie (4, 4b) mittels einer Klebefläche (20, 20a) ein Unterfütterungs-Streifen (21, 21a) für eine Wandfliese (3) angeordnet ist.

8. Dicht- und Montageband (100a, 100b) nach einem der vorhergehenden Ansprüche, **dadurch gekennzeichnet, dass** die Trägerfolie (4a, 4b) im montierten Zustand des Dicht- und Montagebandes (100a, 100b) eine annähernd waagerechte Trägerfläche (14, 14a) aufweist, die mittels einer Klebefläche (16, 16a) mit einer annähernd waagerechten Fläche (13) des Einbaugegenstandes (2) verklebt ist.

9. Dicht- und Montageband (100a, 100b) nach Anspruch 8, **dadurch gekennzeichnet, dass** die annähernd waagerechte Trägerfläche (14, 14a) mittels einer Klebefläche (17, 17a) einen Schaumstoff-Streifen (18, 18a) mit mindestens einer Längsperforation (19, 19a) trägt.

10. Dicht- und Montageband (100, 100a, 100b) nach einem der vorhergehenden Ansprüche, **dadurch gekennzeichnet, dass** der Klebstoff der Klebeflächen (8, 8a, 8b, 10, 10a, 10b, 11, 11a, 11b, 15, 16, 16a, 17, 17a, 20, 20a, 22, 24, 25) elastisch ist.

11. Dicht- und Montageband (100, 100a, 100b) nach einem der vorhergehenden Ansprüche, **dadurch gekennzeichnet, dass** das Material des Verlängerungs-Dichtstreifens (7, 7a, 7b) plastisch dehnbar ist.

## Claims

1. Sealing and mounting tape (100, 100a, 100b) for setting a built-in object (2) to at least one connecting wall (1) or at least one connection floor, the sealing and mounting tape (100, 100a, 100b) comprising a carrier foil (4, 4a, 4b) with a lower portion (6, 6a, 6b) and a first adhesive surface (11, 11a, 11b) arranged thereon on the side towards the built-in object, for an approximately vertical surface (12) of the built-in object (2), and with an upper region (5, 5a, 5b), as well as a second adhesive surface (8, 8a, 8b) mounted on side of the connection wall for the at least one connection wall (1) or the at least one connection floor, **characterized in that** the second adhesive surface (8, 8a) on the side towards the connection wall is arranged on an extension sealing strip (7, 7a, 7b) and the extension sealing strip (7, 7a, 7b) is glued to the upper portion (5, 5a, 5b) of the carrier foil (4, 4a, 4b) in an over- or underlapping manner or is welded with it.

2. Sealing and mounting tape (100, 100a, 100b) according to claim 1, **characterized in that** the extension sealing strip (7, 7a, 7b) consists of a softer, more flexible material than the material of the upper portion (5, 5a, 5b) of the carrier foil (4, 4a, 4b).

3. Sealing and mounting tape (100, 100a) according to claim 1 or 2, **characterized in that** the extension sealing strip (7, 7a) overlaps the upper portion (5, 5a) of the carrier foil (4, 4a) so that in the mounted state of the sealing and mounting tape (100, 100a) the upper portion (5, 5a) of the carrier foil (4, 4a) is partially enclosed between the extension sealing strip (7, 7a) and the connection wall (1) or the connection floor.

4. A sealing and mounting tape (100b) according to claim 1 or 2, **characterized in that** the extension sealing strip (7b) underlaps the upper portion (5b) of the carrier foil (4b) so that in the mounted state of the sealing and mounting tape (100b) the extension sealing strip (7b) is partially enclosed between the upper portion (5b) of the carrier foil (4b) and the connecting wall (1) or the connection floor.

5. Sealing and mounting tape (100, 100a, 100b) according to one of the preceding claims, **characterized in that** a sound barrier (9, 9a, 9b) is arranged on the lower portion (6, 6a, 6b) of the carrier foil (4, 4a, 4b), by means of an adhesive surface (10, 10a, 10b).

6. Sealing and mounting tape (100b) according to one of the preceding claims, **characterized in that** a capillary protection adhesive strip (23) is arranged on the upper portion (5b) of the carrier foil (4b), by means of an adhesive surface (24).

7. Sealing and mounting tape (100, 100b) according to one of the preceding claims, **characterized in that** a lining strip (21, 21a) for a wall tile (3) is arranged on the upper portion (5, 5b) of the carrier foil (4, 4b), by means of an adhesive surface (20, 20a) .

8. Sealing and mounting tape (100a, 100b) according to one of the preceding claims, **characterized in that** the carrier foil (4a, 4b) in the mounted state of the sealing and mounting tape (100a, 100b) has an approximately horizontal carrier surface (14, 14a) which is bonded by means of an adhesive surface (16, 16a) to an approximately horizontal surface (13) of the built-in object (2).

9. Sealing and mounting tape (100a, 100b) according to claim 8, **characterized in that** the approximately horizontal carrier surface (14, 14a) carries by means of an adhesive surface (17, 17a) a foam strip (18, 18a) with at least one longitudinal perforation (19, 19a).

10. Sealing and mounting tape (100, 100a, 100b) according to one of the preceding claims, **characterized in that** the adhesive of the adhesive surfaces (8, 8a, 8b, 10, 10a, 10b, 11, 11a, 11b, 15, 16, 16a, 17, 17a, 20, 20a, 22, 24, 25) is elastic.

11. Sealing and mounting tape (100, 100a, 100b) according to one of the preceding claims, **characterized in that** the material of the extension sealing tape (7, 7a, 7b) is plastically stretchable.

## Revendications

1. Bande d'étanchéité et de montage (100, 100a, 100b) pour la mise d'un objet de montage (2) contre au moins une paroi de raccordement (1) ou au moins un sol de raccordement, la bande d'étanchéité et de montage (100, 100a, 100b) comprenant une feuille support (4, 4a, 4b) avec une zone inférieure (6, 6a, 6b) et une première surface adhésive (11, 11a, 11b) disposée sur celle-ci et se trouvant du côté de l'objet de montage, pour une surface approximativement verticale (12) de l'objet de montage (2), et avec une zone supérieure (5, 5a, 5b), de même qu'une deuxième surface adhésive (8, 8a, 8b) se trouvant du côté de la paroi de raccordement pour au moins une paroi de raccordement (1) ou au moins un sol de raccordement, **caractérisée en ce que** la deuxième surface adhésive (8, 8a, 8b) du côté de la paroi de raccordement est disposée sur une bande d'étanchéité d'extension (7, 7a, 7b) et la bande d'étanchéité d'extension (7, 7a, 7b) est collée sur la zone supérieure (5, 5a, 5b) de la feuille support (4, 4a, 4b) avec chevauchement au-dessus ou au dessous ou elle y est soudée.

2. Bande d'étanchéité et de montage (100, 100a, 100b) selon la revendication 1, **caractérisée en ce que** la bande d'étanchéité d'extension (7, 7a, 7b) est constituée d'un matériau plus souple et plus flexible que le matériau de la zone supérieure (5, 5a, 5b) de la feuille support (4, 4a, 4b).

3. Bande d'étanchéité et de montage (100, 100a) selon la revendication 1 ou 2, **caractérisée en ce que** la bande d'étanchéité d'extension (7, 7a) chevauche la zone supérieure (5, 5a) de la feuille support (4, 4a) de sorte qu'à l'état monté de la bande d'étanchéité et de montage (100, 100a), la zone supérieure (5, 5a) de la feuille support (4, 4a) est partiellement enfermée entre la bande d'étanchéité d'extension (7, 7a) et la paroi de raccordement (1) ou le sol de raccordement.

4. Bande d'étanchéité et de montage (100b) selon la revendication 1 ou 2, **caractérisée en ce que** la bande d'étanchéité d'extension (7b) chevauche la zone supérieure (5b) de la feuille support (4b) de sorte qu'à l'état monté de la bande d'étanchéité et de montage (100b), la bande d'étanchéité d'extension (7b) est partiellement enfermée entre la zone supérieure (5b) de la feuille support (4b) et la paroi de raccordement (1) ou le sol de raccordement.

5. Bande d'étanchéité et de montage (100, 100a, 100b) selon l'une des revendications précédentes, **caractérisée en ce que** sur la zone inférieure (6, 6a, 6b) de la feuille support (4, 4a, 4b) est disposée, au moyen d'une surface adhésive (10, 10a, 10b), une barrière acoustique (9, 9a, 9b).

6. Bande d'étanchéité et de montage (100b) selon l'une des revendications précédentes, **caractérisé en ce que** sur la zone supérieure (5b) de la feuille support (4b) est disposée, au moyen d'une surface adhésive (24), une bande adhésive de protection capillaire (23).

7. Bande d'étanchéité et de montage (100, 100b) selon l'une des revendications précédentes, **caractérisée en ce que** sur la zone supérieure (5, 5b) de la feuille support (4, 4b) est disposée, au moyen d'une surface adhésive (20, 20a), une bande de calage (21, 21a) pour une dalle murale (3).

8. Bande d'étanchéité et de montage (100a, 100b) selon l'une des revendications précédentes, **caractérisée en ce que** la feuille support (4a, 4b) à l'état monté de la bande d'étanchéité et de montage (100a, 100b) présente une surface support (14, 14a) approximativement horizontale qui est liée au moyen d'une surface adhésive (16, 16a) à une surface approximativement horizontale (13) de l'objet de montage (2).

9. Bande d'étanchéité et de montage (100a, 100b) selon la revendication 8, **caractérisée en ce que** la surface de support (14, 14a) approximativement horizontale porte au moyen d'une surface adhésive (17, 17a) une bande de mousse (18, 18a) avec au moins une perforation longitudinale (19, 19a).

10. Bande d'étanchéité et de montage (100, 100a, 100b) selon l'une des revendications précédentes, **caractérisée en ce que** l'adhésif des surfaces adhésives (8, 8a, 8b, 10, 10a, 10a, 10b, 11, 11a, 11b, 15, 16, 16a, 17, 17a, 20, 20a, 22, 24, 25) est élastique.

11. Bande d'étanchéité et de montage (100, 100a, 100b) selon l'une des revendications précédentes, **caractérisée en ce que** le matériau de la bande d'étanchéité d'extension (7, 7a, 7b) est extensible plastiquement.
